# EUROPÄISCHE PATENTSCHRIFT

(11) **EP 1 173 703 B1**
(45) Veröffentlichungstag und Bekanntmachung des Hinweises auf die Patenterteilung: **03.12.2003**
(21) Anmeldenummer: 00925170.3
(22) Anmeldetag: 05.04.2000
(51) Int. Cl.: F17C 9/00

(54) **PUMPENSYSTEM ZUM FÖRDERN VON KRYOGENEN FLÜSSIGKEITEN**
PUMP SYSTEM FOR DELIVERING CRYOGENIC LIQUIDS
SYST ME DE POMPE POUR LA DISTRIBUTION DE LIQUIDES CRYOG NIQUES

(30) Priorität: 08.04.1999 DE 19915853
(43) Veröffentlichungstag der Anmeldung: 23.01.2002
(73) Patentinhaber: Linde Gas Aktiengesellschaft, 82049 Höllriegelskreuth (DE)
(72) Erfinder: DRESLER, Helmut, D-83308 Trostberg (DE)
(74) Vertreter: Zahn, Christoph
(86) Internationale Anmeldenummer: EP0003032
(87) Internationale Veröffentlichungsnummer: WO00061990

(56) Entgegenhaltungen:
- EP-A- 0 586 294
- US-A- 4 917 576
- US-A- 4 932 214

## Beschreibung

Die Erfindung betrifft ein Pumpensystem zum Fördern von kryogenen Flüssigkeiten, bestehend aus einem einen Flüssigkeitsraum und einen Gasraum bildenden Vorratstank für die kryogene Flüssigkeit und mindestens einer in einem Behälter angeordneten Pumpe, wobei der Behälter mit dem Vorratstank derart in Verbindung steht, daß im Behälter ein Flüssigkeitsspiegel einstellbar ist.

Zur Förderung von kryogenen Flüssigkeiten mit Temperaturen von unter -200°C werden bisher in der Regel einzylindrige Pumpen verwendet, welche von oben in ein Isoliergefäß eingeführt werden. Aus montagetechnischen Gründen erfolgt auch die Abführung des Förderstromes über diese obere Pumpenmontageöffnung im Isoliergefäß. Die Befüllung der Gefäße mit den zu fördernden Medien erfolgt meistens von einem großen Vorratstank aus, wobei die Bestimmung der maximalen Füllhöhe in diesen Gefäßen durch Überlaufrohre (Peilrohre) oder Inhaltsanzeigen ermittelt wird. Die Steuerung der maximalen Füllhöhe erfolgt meistens manuell oder über einen durch die Flüssigkeit ausgelösten Kontakt, durch weichen ein Magnetventil in der Zu- oder Abgasleitung angesteuert wird. Da die Pumpen ohne Unterkühlung der Förderflüssigkeit nicht betrieben werden können, besitzen diese großvolumigen Gefäße eine Druckaufbaueinrichtung, wodurch die Förderflüssigkeit kurzzeitig unterkühlt werden kann.

Da insbesondere Wasserstoff in verflüssigter Form immer mehr an Bedeutung gewinnt und Kraftfahrzeuge bereits mit Wasserstoff betrieben werden, ist es notwendig, geeignete Pumpen zum Betanken dieser Fahrzeuge bereitzustellen.

Die bekannten Pumpen mögen für Laborexperimente mit kleinen Förderströmen und großen zulässigen Druckpulsationen geeignet sein, für eine schnelle, pulsationsfreie Kraftfahrzeugflüssigbetankung ist diese Art von Pumpen aber ungeeignet. Außerdem müssen derartige "Tankstellenpumpen" jederzeit einsatzbereit sein (kaltgestellt), so daß durch die konstruktiv erforderliche kompakte Bauweise bei den bekannten Pumpen ein enormer Wärmefluß in die zu fördernde Flüssigkeit stattfindet und die dadurch für die Funktion erforderliche Flüssigkeitsunterkühlung bald aufgehoben ist.

Der vorliegenden Erfindung liegt die Aufgabe zugrunde, ein Pumpensystem der eingangs genannten Art zur Verfügung zu stellen, mit dem auch größere Mengen an kryogenen Flüssigkeiten, insbesondere auch flüssiger Wasserstoff, wirtschaftlich und zuverlässig gefördert werden können.

Diese Aufgabe wird erfindungsgemäß dadurch gelöst. daß
a) der Behälter in zwei Räume (h, f) aufgeteilt ist, wobei der eine Raum (h) vollständig unterhalb des Gasraums des Vorratstanks angeordnet ist und über eine Flüssigkeitszufuhrleitung mit dem Flüssigkeitsraum des Vorratstanks in Verbindung steht. wahrend der andere Raum (f) oberhalb des Raums (h) und zumindest teilweise ebenfalls unterhalb des Gasraums des Vorratstanks angeordnet ist, wobei der Raum (f) über eine Gasrückführleitung mit dem Gasraum des Vorratstanks in Verbindung steht,
b) die Saugseite der Pumpe mit dem Raum (h) in Verbindung steht, während die Druckseite mit einer außerhalb des Behälters vorgesehenen Abgabestelle zur Abgabe der kryogenen Flüssigkeit an einen Verbraucher in Verbindung steht,
c) die Räume (h) und (f) über eine Verbindungsleitung miteinander verbunden sind und
d) oberhalb des offenen Endes der im Raum (f) mündenden Gasrückführleitung ein Gasraum verbleibt.

Die vorgeschlagene Aufteilung des Behälters in zwei Räume, in Verbindung mit einer Gasrückführleitung, ermöglicht eine selbständige Konstanthaltung des Flüssigkeitsniveaus in diesem Behälter, wobei die Flüssigkeit im Raum (f) immer im Siedezustand ist.

Gemäß einer besonders bevorzugten Ausführungsform der Erfindung ist der Behälter mittels eines Druckgehäuses in die Räume (h, f) aufgeteilt, welches einerseits mit der Druckseite der Pumpe und andererseits mit der außerhalb des Behälters vorgesehenen Abgabestelle zur Abgabe der kryogenen Flüssigkeit an einen Verbraucher in Verbindung steht. An dieses Druckgehäuse sind zweckmäßigerweise mehrere, d.h. mindestens zwei Pumpen angeschlossen, wobei die Druckseiten der Pumpen mit dem gemeinsamen Druckgehäuse in Verbindung stehen. Von Vorteil ist außerdem eine thermische Trennung der Räume (h) und (f), was gemäß der bevorzugten Ausführungsform ebenfalls durch das Druckgehäuse erreicht wird.

Die Pumpe ist mit Vorteil als Kolbenpumpe mit Zugstange und Federrückholung ausgebildet, wobei der Pumpendruckhub durch Ausüben von Zugkräften auf den Kolben mittels der Zugstange durchführbar und der Kolben mittels Federn in eine Ausgangsposition rückholbar ist. Zweckmäßigerweise sind mehrere solcher Pumpen in den Behälter eingeführt. Aufgrund des möglichen Einzeleinbaus und der auf Zug arbeitenden Pumpen werden die für die Wärmeleitung relevanten Querschnitte an den Pumpen sowie am Behälter sehr klein gehalten, wodurch nur eine sehr geringe Wärmeeinbringung in die Behälterflüssigkeit erfolgt. Zur weiteren Verringerung der Wärmeeinbringung in den Behälter ist die Zugstange vorzugsweise über eine Abdichtung aus dem Behälter herausgeführt. Bei der besonders praktikablen Lösung, wonach die Pumpe von oben in den Behälter eingesetzt ist, ist die Zugstange über einen wärmeisolierten Behälterhals aus dem Behälter herausgeführt. Um die Gaswärmeleitung weiter zu minimieren, kann in dem Behälterhals eine Isolierpatrone vorgesehen werden.

Das erfindungsgemäße Pumpensystem ist für eine ganze Reihe von Anwendungen mit Vorteil einzusetzen. In Verbindung mit einem entsprechenden Taumetscheibenantrieb ist die Anzahl sowie der Durchmesser der einzelnen Pumpen in einem gemeinsamen Druckgehäuse stark variabel, so daß die Pumpen nach diesem Konstruktionsprinzip praktisch allen geforderten Fördermengen bei minimaler Druckpulsation angepaßt werden können. Aufgrund der Vorzüge dieses Pumpenkonzeptes gegenüber dem bisherigen ist der Einsatz solcher Pumpen auch als Bordpumpe bei der neuen Flugzeuggeneration mit Wasserstoffantrieb denkbar. Aufgrund der geringen Massen des Pumpensystems sind die Abkühlverluste sehr gering. Durch den sehr einfachen Konstruktionsaufbau wird eine sehr preiswerte, betriebssichere und technisch hochwertige Pumpe zur Verfügung gestellt.

Im folgenden soll die Erfindung anhand von in den Figuren schematisch dargestellten Ausführungsbeispielen näher erläutert werden.

Es zeigen:
Figur 1 den Einbau einer dreizylindrigen Wasserstoffpumpe in einen Behälter.
Figur 2 einen Vollschnitt einer der drei in das Druckgehäuse eingeschobenen Pumpen.

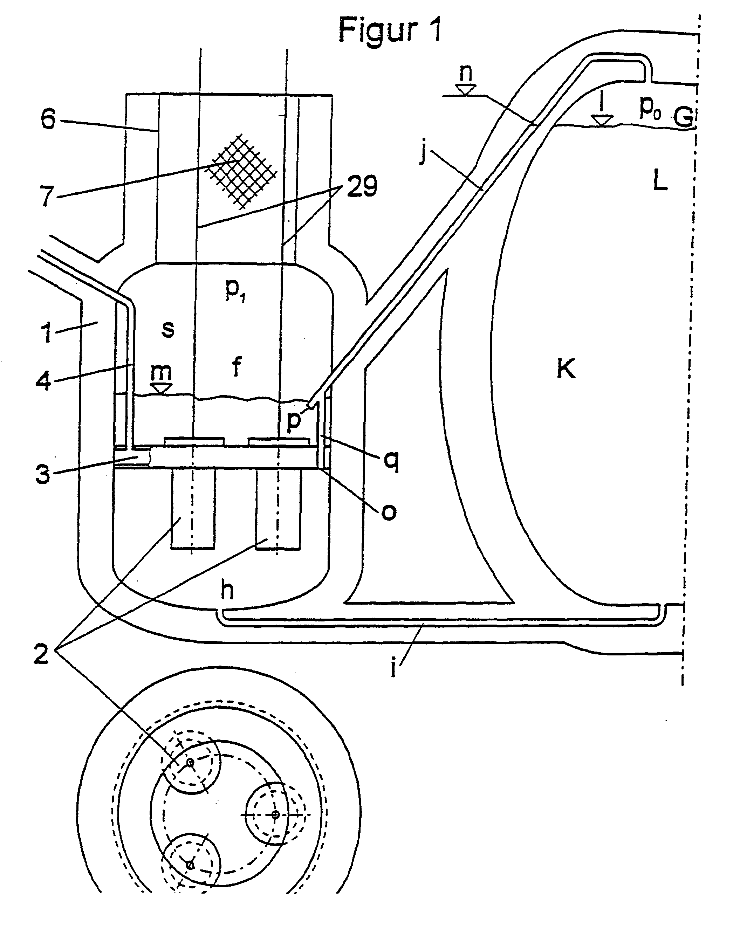

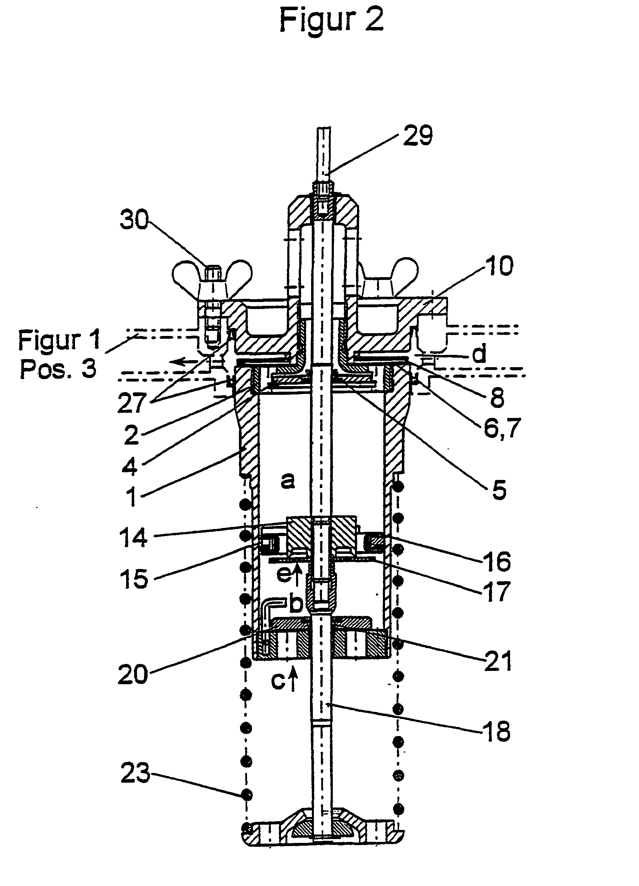

In Figur 1 ist ein Behälter 1 dargestellt. der zur Aufnahme und zur Befestigung der drei von oben einzeln eingeschobenen Pumpen 2 ein fest integriertes, in die Vorratsflüssigkeit eingetauchtes Druckgehäuse 3 aufweist. Durch dieses Druckgehäuse sind die Druckseiten der drei Pumpen 2 miteinander verbunden. Die Fortleitung der weitgehend pulsationsfreien Druckflüssigkeit aus dem Druckgehäuse 3 erfolgt über eine ebenfalls in den Behälter 1 integrierte Druckleitung 4. Durch den Einzeleinbau der auf Zug arbeitenden Pumpen 2 können die für die Wärmeleitung relevanten Querschnitte an den Pumpen 2 sowie dem Behälter 1 sehr klein gehalten werden. Dies wird insbesondere durch die dünnen Zugstangen 29 und das dünnwandige und kleine Behälterhalsrohr 6 erreicht. Insbesondere für den Betrieb mit flüssigem Wasserstoff ist die mit der Erfindung erzielte verminderte Wärmeeinbringung von außergewöhnlicher Bedeutung, da flüssiger Wasserstoff eine sehr tiefe Temperatur von ca. -253°C und sehr geringe Verdampfungswärme aufweist. Erschwerend kommt noch hinzu, daß die Pumpe als "Tankstellenpumpe" immer betriebsbereit (kaltgestellt) sein muß und der durch Wärmeeinbringung entstehende Gasanfall als schädlich gewertet wird. Da Wasserstoffgas den Höchstwert der Gaswärmeleitung aller technischen Gase besitzt, wird im Behälterhalsrohr 6 eine Isolierpatrone 7 aus dünnwandigem Glasgewebe-Epoxitharz mit Isolierschüttung mit den Durchführungen für die Zugstangen 29 verwendet. Durch diese Maßnahme wird die Wärmeeinbringung in den Behälter weiter reduziert.

Das Druckgehäuse 3 dient im Behälter 1 nicht nur der Aufnahme der Pumpen 2, sondem es teilt auch den Behälter 1 in zwei Räume h und f auf. Während der Raum h unmittelbar über die Flüssigzulaufleitung i mit der Flüssigkeit im Vorratstank K in Verbindung steht, wird die Flüssigkeit in den Raum f über die Gasrückführleitung j eingebracht. Hierzu mündet die Gasrückführleitung j in den Räumen h, f sowie im Gasraum des Vorratstankes K, so daß bei o eintretende, mit dem Tank kommunizierende Flüssigkeit über die Rohrmündung p in den Raum f einströmt. Das beim Abkühlen der Pumpe anfallende Gas wird dem Gasraum G des Vorratstanks K zugeführt. Steigt das Flüssigkeitsniveau m über die Rohrmündung p, so erfolgt ein Flüssigkeitsverschluß und das im Raum f befindliche Gas kann nicht entweichen. Da der Druck im Vorratsbehälter P₁ um den Betrag P₀ + Dichte der Flüssigkeit x Höhe größer ist als der Tankdruck P₀, ist auch die sich im Behälter 1 befindende Flüssigkeit im Siedezustand um diesen Betrag wärmer als im Vorratstank K. Beim Pumpbetrieb tritt, wie in Figur 2 dargestellt, die zu fördernde Flüssigkeit über die Bohrungen c in die Pumpen ein. Da diese Eintrittsbohrungen dem Raum h (Figur 1) zugeordnet sind, wird aus diesem die zu fördemde Flüssigkeit entnommen. Dabei senkt sich der in der Gasrückführleitung j stehende Flüssigkeitsspiegel n um den Betrag der Widerstände in der Flüssigkeitszulaufleitung i ab. Die daraus resultierende Druckabsenkung im Behälter 1 bewirkt eine Absenkung des Flüssigkeitsspiegels m, so daß der höhere Gasdruck P₁ über die Rohrmündung p so weit abgebaut wird, bis sich ein neuer Gleichgewichtszustand einstellt und die Flüssigkeit wieder die Gasabfuhr versperrt. Da die aus dem vollen Vorratstank K (hohe Flüssigkeitssäule) strömende Förderflüssigkeit jetzt nicht im Gleichgewicht von Druck und Temperatur ist, sondern die niedrigere Temperatur des Vorratstanks K bei P₀ (Siedezustand) besitzt, erfolgt eine Abkühlung des Temperaturniveaus im Raum h (die Pumpe fördert bei vollem Tank nur die ankommende kältere Flüssigkeit). Aufgrund der räumlichen Aufteilung des Behälters 1 durch das Druckgehäuse 3 in zwei Räume h und f erfolgt ein immer konstantes, sich selbst einregelndes Flüssigkeitsniveau m im Behälter 1 (auch beim Betrieb der Pumpe) sowie eine thermische Trennung der Flüssigkeiten. Durch diese thermische Trennung beider Räume h und f bleibt auch beim Pumpbetrieb die Flüssigkeit im oberen Raum f immer im Siedezustand von P₁ und der Wärmeeinfall über das Haisrohr 6 sowie die in Figur 2 dargestellte Ableitung der geringen Pumpenwärme über das Ventil 4 wird in Gasform über den Flüssigkeitsverschluß p dem Vorratstank K zugeführt. Eine Nichtaufteilung des Behälters hätte zur Folge, daß beim Pumpbetrieb und vollem Vorratstank K die nur sehr geringe und schädliche Wärmeeinbringung über das Behälterhalsrohr 6 nicht ausreichen würde, die ankommende kältere Flüssigkeit entsprechend dem Druck P₁ in den Siedezustand anzuwärmen. Aufgrund dieser Tatsache würde eine Einkondensation von Gas erfolgen und die kalte Flüssigkeit würde im Behälter 1 immer höher steigen und eine Vereisung des Behälteroberteils durch Überfluten verursachen.

In Figur 2 ist ein Vollschnitt einer der drei in das Druckgehäuse eingeschobenen Pumpen dargestellt. Die am Druckgehäuse (Figur 1, Bezugsziffer 3) mittels Schrauben 30 befestigte Pumpe weist einen Pumpenzylinder 1 auf, welcher über ein Strömungsteil 2 mit einem Deckelflansch 10 verschraubt ist. Dabei wird ein Ringspalt d gebildet, in welchem ein mit einer Tellerfeder 8 belastetes Membran-Druckventil 6, 7 angebracht ist. Durch das Vorhandensein dieses Ringspaltes d sowie dessen beidseitiger Abdichtung 27 wird der Einzeleinbau der Pumpen in das gemeinsame Druckgehäuse möglich.

Die drei Pumpen werden durch einen nicht dargestellten, am Behälterdeckel befestigten Taumelscheibenantrieb betätigt. Im Behälter, der nur wenige Liter Fassungsvermögen aufweist, befindet sich die zu fördernde kryogene Flüssigkeit. Die Übertragung der Zugkräfte für den Pumpendruckhub vom Antrieb zu den in die Behälterflüssigkeit eingetauchten Pumpen erfolgt über die im Behälterdeckel abgedichteten Zugstangen 29. Bei Hubumkehr werden die Kolben 14, 17 durch die Kraft der Federn 23 in eine Ausgangsposition entgegen dem Druckhub gebracht. Hierbei wird ein gehaltener, durch Federn an den Pumpenzylinder 1 angedrückter Kolbenring 15, 16 an Stegen des Kolbenkörpers 14 zur Anlage gebracht. Über den sich so einstellenden Spalt wird die Flüssigkeit aus dem vorausgegangenen Hubzyklus auf die Druckseite a des Kolbens drucklos umgeschoben. Gleichzeitig wurde bei diesem Hubbeginn ein Ventil 4, in welchem eine Dichtung 5 zur Abdichtung der Zugstange 29 angebracht ist, durch die Zugstange 29 über die Reibung zwingend geöffnet. Hierbei wurde die durch die Kolbenringreibung erzeugte Wärme abgeführt, so daß hierdurch stets eine optimale Zylinderfüllung garantiert wird. Durch dieses Verfahren ändert sich auch die Temperatur der Druckflüssigkeit gegenüber der Vorratsflüssigkeit nicht, was sich positiv auf die Messung der Abgabemenge auswirkt.

Bei Hubumkehr wird durch die Zugstange 29 erst das Ventil 4 geschlossen, ehe der Kolbenring 15, 16 den Spalt am Kolbenkörper 14 schließt und die Druckflüssigkeit über das, durch die Feder 8 belastete Membran-Auslaßventil 6, 7 aus dem Pumpenzylinder 1 in das gemeinsame Druckgehäuse (Figur 1, Bezugsziffer 3) geschoben wird.

Bei Überschreitung des Auslegedruckes (maximaler Förderdruck) wird durch den Kolbenring 15, 16 ein als Tellerfeder ausgebildeter Druckbegrenzer 17 vom Kolbenkörper 14 gedrückt und der Überdruck über die Bohrungen e abgebaut. Zum Zeitpunkt dieser Hubumkehr wurde auch sofort ein am unteren Pumpenzylinderende befindliches Bodenventil 20, welches über eine definierte Reibung einer Dichtung 21 auf dem unteren Teil 18 der Zugstange 29 geöffnet wird, geöffnet Es kann nun über die Bohrungen c die Vorratsflüssigkeit, ohne ein Ventil öffnen zu müssen, druckverlustfrei in das vom Kolben 14, 17 freigegebene Volumen b in den Pumpenzylinder nachströmen. Kurz vor dem oberen Totpunkt wird aufgrund der Durchmesserverkleinerung der Zugstange 18 die Reibung zwischen dieser und dem Bodenventil 20 aufgehoben und das Bodenventil 20 schließt durch das eigene Gewicht.

Mit der beschriebenen Pumpenanordnung ist es möglich, Flüssigkeiten auch mit kleinen Verdampfungswärmen, wie z.B. flüssigen Wasserstoff im Siedezustand (ohne statische Säule) mit gutem Förderwirkungsgrad zu pumpen. Da durch die Zwangsöffnung des Ventils 4 die Erwärmung des Pumpenzylinders ausgeschlossen wird, erfolgt bei jedem Hub eine optimale Zylinderfüllung, wobei die sonst übliche Anwärmung der Förderflüssigkeit verhindert wird.

## Patentansprüche

1. Pumpensystem zum Fördem von kryogenen Flüssigkeiten, bestehend aus einem einen Flüssigkeitsraum (L) und einen Gasraum (G) bildenden Vorratstank (K) für die kryogene Flüssigkeit und mindestens einer in einem Behälter (1) angeordneten Pumpe (2), wobei der Behälter (1) mit dem Vorratstank (K) derart in Verbindung steht, daß im Behälter (1) ein Flüssigkeitsspiegel (m) einstellbar ist, **dadurch gekennzeichnet, daß**
a) der Behälter (1) in zwei Räume (h, f) aufgeteilt ist, wobei der eine Raum (h) vollständig unterhalb des Gasraums (G) des Vorratstanks (K) angeordnet ist und über eine Flüssigkeitszufuhrleitung (i) mit dem Flüssigkeitsraum (L) des Vorratstanks in Verbindung steht, während der andere Raum (f) oberhalb des Raums (h) und zumindest teilweise ebenfalls unterhalb des Gasraums (G) des Vorratstanks (K) angeordnet ist, wobei der Raum (f) über eine Gasrückführleitung (j) mit dem Gasraum (G) des Vorratstanks (K) in Verbindung steht,
b) die Saugseite der Pumpe (2) mit dem Raum (h) in Verbindung steht, während die Druckseite mit einer außerhalb des Behälters (1) vorgesehenen Abgabestelle zur Abgabe der kryogenen Flüssigkeit an einen Verbraucher in Verbindung steht,
c) die Räume (h) und (f) über eine Verbindungsleitung (q) miteinander verbunden sind und
d) oberhalb des offenen Endes der im Raum (f) mündenden Gasrückführleitung (j) ein Gasraum (s) verbleibt.

2. Pumpensystem nach Anspruch 1, **dadurch gekennzeichnet, daß** der Behälter (1) mittels eines Druckgehäuses (3) in die Räume (h, f) aufgeteilt ist, das einerseits mit der Druckseite der Pumpe (2) und andererseits mit der außerhalb des Behälters (1) vorgesehenen Abgabestelle zur Abgabe der kryogenen Flüssigkeit in Verbindung steht.

3. Pumpensystem nach Anspruch 1 oder 2, **dadurch gekennzeichnet, daß** mehrere, d.h. mindestens zwei Pumpen (2) in dem Behälter (1) angeordnet sind, deren Druckseiten mit dem gemeinsamen Druckgehäuse (3) in Verbindung stehen.

4. Pumpensystem nach einem der Ansprüche 1 bis 3, **dadurch gekennzeichnet, daß** die Pumpe (2) als Kolbenpumpe mit Zugstange (29) und Federrückholung ausgebildet ist. wobei der Pumpendruckhub durch Ausüben von Zugkräften auf den Kolben (14, 17) mittels der Zugstange (29) durchführbar und der Kolben (14, 17) mittels Federn (23) in eine Ausgangsposition rückholbar ist.

5. Pumpensystem nach Anspruch 4, **dadurch gekennzeichnet, daß** die Zugstange (29) über eine Abdichtung (5) aus dem Behälter (1) herausgeführt ist.

6. Pumpen system nach Anspruch 5, **dadurch gekennzeichnet, daß** die Zugstange (29) über einen wärmeisolierten Behälterhals (6) aus dem Behälter (1) herausgeführt ist.

7. Pumpensystem nach einem der Ansprüche 1 bis 6, **dadurch gekennzeichnet, daß** die Räume (h, f) weitgehend thermisch voneinander getrennt sind.

## Claims

1. Pump system for delivering cryogenic liquids, comprising a reservoir tank (K), which forms a liquid space (L) and a gas space (G), for the cryogenic liquid and at least one pump (2) arranged in a vessel (1), the vessel (1) being in communication with the reservoir tank (K) in such a manner that a liquid level (M) can be set in the vessel (1), **characterized in that**
a) the vessel (1) is divided into two spaces (h, f), one space (h) being arranged completely below the gas space (G) of the reservoir tank (K) and being in communication with the liquid space (L) of the reservoir tank via a liquid feed line (i), while the other space (f) is arranged above the space (h) and is likewise arranged at least partially below the gas space (G) of the reservoir tank (K), the space (f) being in communication with the gas space (G) of the reservoir tank (K) via a gas return line (j),
b) the suction side of the pump (2) is in communication with the space (h), while the delivery side is in communication with a discharge location, provided outside the vessel (1), for discharging the cryogenic liquid to a consumer,
c) the spaces (h) and (f) are connected to one another via a connecting line (q), and
d) a gas space (s) remains above the open end of the gas return line (j) which opens out in the space (f).

2. Pump system according to Claim 1, **characterized in that** the vessel (1) is divided into the spaces (h, f) by means of a pressure housing (3) which on one side is in communication with the delivery side of the pump (2) and on the other side is in communication with the discharge location, which is provided outside the vessel (1), for discharging the cryogenic liquid.

3. Pump system according to Claim 1 or 2, **characterized in that** a plurality of, i.e. at least two, pumps (2) are arranged in the vessel (1), the delivery sides of which pumps are in communication with the common pressure housing (3) .

4. Pump system according to one of Claims 1 to 3, **characterized in that** the pump (2) is designed as a piston pump with pull rod (29) and spring return, it being possible for the pump delivery stroke to be carried out by tensile forces being exerted on the piston (14, 17) by means of the pull rod (29), and it being possible for the piston (14, 17) to be returned to a starting position by means of springs (23).

5. Pump system according to Claim 4, **characterized in that** the pull rod (29) is led out of the vessel (1) via a seal (5).

6. Pump system according to Claim 5, **characterized in that** the pull rod (29) is led out of the vessel (1) via a thermally insulated vessel neck (6).

7. Pump system according to one of Claims 1 to 6, **characterized in that** the spaces (h, f) are substantially thermally isolated from one another.

## Revendications

1. Système de pompe pour la distribution de liquides cryogéniques, se composant d'un réservoir (K) de liquide cryogénique formant un espace pour le liquide (L) et un espace pour le gaz (G) et d'au moins une pompe (2) disposée dans un récipient (1), le récipient (1) étant connecté au réservoir (K) de telle sorte qu'un niveau de liquide (m) puisse être ajusté dans le récipient (1), **caractérisé en ce que**
a) le récipient (1) est divisé en deux espaces (h, f), un espace (h) étant disposé complètement en dessous de l'espace pour le gaz (G) du réservoir (K) et étant connecté par le biais d'une conduite d'alimentation en liquide (i) à l'espace pour le liquide (L) du réservoir, tandis que l'autre espace (f) est disposé au-dessus de l'espace (h) et au moins partiellement aussi en dessous de l'espace pour le gaz (G) du réservoir (K), l'espace (f) étant connecté par le biais d'une conduite de retour de gaz (j) à l'espace pour le gaz (G) du réservoir (K),
b) le côté aspiration de la pompe (2) est connecté à l'espace (h) tandis que le côté refoulement est connecté à un point de délivrance prévu en dehors du récipient (1) pour délivrer le liquide cryogénique à un utilisateur,
c) les espaces (h) et (f) sont connectés l'un à l'autre par le biais d'une conduite de raccordement (q) et
d) un espace pour le gaz (s) subsiste au-dessus de l'extrémité ouverte de la conduite de retour de gaz (j) débouchant dans l'espace (f).

2. Système de pompe selon la revendication 1, **caractérisé en ce que** le récipient (1) est divisé en les espaces (h, f) au moyen d'un carter sous pression (3), qui d'une part est connecté au côté refoulement de la pompe (2) et d'autre part au point de délivrance prévu en dehors du récipient
(1) pour délivrer le liquide cryogénique.

3. Système de pompe selon la revendication 1 ou 2, **caractérisé en ce que** plusieurs, c'est-à-dire au moins deux pompes (2) sont disposées dans le récipient (1), leurs côtés refoulement étant connectés au carter sous pression commun (3).

4. Système de pompe selon l'une quelconque des revendications 1 à 3, **caractérisé en ce que** la pompe (2) est réalisée en tant que pompe à piston avec une tige de traction (29) et un rappel à ressort, la course de la pression de la pompe pouvant être réalisée par l'application de forces de traction sur le piston (14, 17) au moyen de la tige de traction (29) et le piston (14, 17) pouvant être rappelé dans une position de départ au moyen de ressorts (23).

5. Système de pompe selon la revendication 4, **caractérisé en ce que** la tige de traction (29) est guidée hors du récipient (1) par le biais d'un joint hermétique (5).

6. Système de pompe selon la revendication 5, **caractérisé en ce que** la tige de traction (29) est guidée hors du récipient (1) par le biais d'un col du récipient (6) isolé thermiquement.

7. Système de pompe selon l'une quelconque des revendications 1 à 6, **caractérisé en ce que** les espaces (h, f) sont essentiellement séparés thermiquement l'un de l'autre.
